# EUROPEAN PATENT SPECIFICATION

(11) **EP 2 782 006 B1**
(45) Date of publication and mention of the grant of the patent: **13.06.2018**
(21) Application number: 13159893.0
(22) Date of filing: 19.03.2013
(51) Int. Cl.: G06F 21/57, G06F 11/36, G06F 9/445, G06F 21/77, G06F 8/60

(54) **Process and system for verifying computer program on a smart card**
Prozess und System zur Überprüfung eines Computerprogramms auf einer Chipkarte
Procédé et système permettant de vérifier un programme informatique sur une carte à puce

(43) Date of publication of application: 24.09.2014
(73) Proprietor: NXP B.V., 5656 AG Eindhoven (NL)
(72) Inventor: Berlach, Reinhard, 5656 AG Eindhoven (NL); Loinig, Johannes, 5656 AG Eindhoven (NL); Haselsteiner, Ernst, 5656 AG Eindhoven (NL)
(74) Representative: Krott, Michel

(56) References cited:
- US-A1- 2006 047 955
- AHMADOU AL KHARY SÃ CR RÃ CR ET AL: "Checking the Paths to Identify Mutant Application on Embedded Systems", 13 December 2010 (2010-12-13), FUTURE GENERATION INFORMATION TECHNOLOGY, SPRINGER BERLIN HEIDELBERG, BERLIN, HEIDELBERG, PAGE(S) 459 - 468, XP019158877, ISBN: 978-3-642-17568-8 * abstract * * page 463, line 24 - page 466, line 13 *
- LEROY X: "BYTECODE VERIFICATION ON JAVA SMART CARDS", SOFTWARE PRACTICE & EXPERIENCE, WILEY & SONS, BOGNOR REGIS, GB, vol. 32, no. 4, 10 April 2002 (2002-04-10) , pages 319-340, XP001081545, ISSN: 0038-0644, DOI: 10.1002/SPE.438
- AHMADOU A. SERE ET AL: "Automatic detection of fault attack and countermeasures", PROCEEDINGS OF THE 4TH WORKSHOP ON EMBEDDED SYSTEMS SECURITY, WESS '09, 1 January 2009 (2009-01-01), pages 1-7, XP55004452, New York, New York, USA DOI: 10.1145/1631716.1631723 ISBN: 978-1-60-558700-4
- LANFANG TAN ET AL: "Formal verification of signature monitoring mechanisms using model checking", SYSTEMS AND INFORMATICS (ICSAI), 2012 INTERNATIONAL CONFERENCE ON, IEEE, 19 May 2012 (2012-05-19), pages 1310-1315, XP032192753, DOI: 10.1109/ICSAI.2012.6223275 ISBN: 978-1-4673-0198-5
- LI JIANLI ET AL: "A Software-Implemented Configurable Control Flow Checking Method", PARALLEL ARCHITECTURES, ALGORITHMS AND PROGRAMMING (PAAP), 2010 THIRD INTERNATIONAL SYMPOSIUM ON, IEEE, 18 December 2010 (2010-12-18), pages 199-205, XP031980337, DOI: 10.1109/PAAP.2010.73 ISBN: 978-1-4244-9482-8
- Maltesson Nils, et al: "Applet Verification Strategies for RAM-Constrained Devices", Information Security and Cryptology - ICISC 2002 Lecture Notes in Computer Science, Springer-Verlag, vol. 2587 2003, pages 1-20, XP002711985, Retrieved from the Internet: URL:http://citeseerx.ist.psu.edu/viewdoc/s ummary?doi=10.1.1.1.6087 [retrieved on 2013-08-29]
- GUILLAUME BARBU ET AL: "Java Card Operand Stack:Â Fault Attacks, Combined Attacks and Countermeasures", 14 September 2011 (2011-09-14), SMART CARD RESEARCH AND ADVANCED APPLICATIONS (CARDIS 2011), LEUVEN, BELGIUM; [LECTURE NOTES IN COMPUTER SCIENCE ; 7079], SPRINGER, BERLIN, GERMANY, PAGE(S) 297 - 313, XP019170910, ISBN: 978-3-642-27256-1 * page 297, line 1 - page 300, last line * * page 306, line 31 - last line *

## Description

### FIELD OF THE INVENTION

The invention relates a process for verifying a computer program on a smart card. The invention also relates to a corresponding system for verifying a computer program on a smart card.

### BACKGROUND OF THE INVENTION

It is known that smart cards may execute applications based on interpreted instructions using a virtual machine. For example, Java Cards comprise a Java Virtual Machine that interprets so-called byte codes. Such smart cards are general-purpose smart cards which may be used, in a smart card form factor, for banking or electronic identification cards. In other form factors they may be used as electronic passports or they may serve as a secure element in mobile phones to allow mobile payment. Because of their general-purpose nature they are also often used as anti-counterfeit devices in gaming consoles or accessories for mobile phones or MP3 players.

The development process for software which is executed on smart cards is typically very cumbersome and requires special skills. This is because of the fact that resources are very limited and that therefore a lot of programming has to be done either in assembler or very low-level C language.

In order to mitigate this problem, the above-mentioned virtual machines have been introduced into smart cards. Java Card is by far the most prominent example. Another example is MULTOS. In the case of Java Card, applications called "applets" are developed in the Java programming language. These applets make use of a rich Java Card application programming interface (API) for essential functionality, such as communication, transactions, or cryptography. This significantly speeds up the development process and makes applets independent of the underlying hardware. This independence is achieved by executing so-called byte codes using a virtual machine on the smart card instead of executing native assembler code by the central processing unit (CPU) of the smart card.

However, many checks of the byte codes have to be performed in order to guarantee the security of the smart card platform and of other applets which exist in parallel on the same smart card. Some of these checks are rather resource intensive. Therefore, in state-of-the-art Java Cards, these checks are separated into two parts: (1) off-card checks, which are performed using a tool on a personal computer (PC), and (2) on-card checks, which are performed using the virtual machine on a smart card.

In this context, the requirement for integrity protection of the applet between the off-card check and the actual deployment on the smart card presents a problem. Without the integrity protection the security of the smart card cannot be ensured, because the smart card has to trust the environment that it has properly performed all the off-card checks.

Integrity protection is typically provided by using asymmetric cryptography to create a signature on the applet after having passed the off-card checks. This signature is then verified by the card upon loading of the applet. This procedure provides the proper integrity protection. However, it also requires a key setup between the party who performs the off-card checks and the smart card wherein the applet will be deployed.

This key setup requires some kind of business relationship between the applet provider or service provider and the card issuer. The idea of an "applet store" where one can just pick any applet and deploy it on any technically compatible smart card is therefore infeasible.

Accordingly, there is a need for a more flexible deployment of applets on smart cards. More specifically, there is a need to mitigate the requirement that smart cards have to trust their environment with respect to having properly performed off-card checks.

US 2006/047955 A1 describes protecting an application of a multi-application smart card against unauthorized manipulations. A system and method for guarding against unauthorized modifications includes partitioning the application into a plurality of basic blocks. Basic blocks are programming atomic units that have one entry point and one exit point and comprise a set of data units. For each basic block a check value associated with a basic block is computed wherein the check value is a function of the data units of the basic block. This check value is somehow remembered and later recalled and checked either during execution of the corresponding basic block of the application program or prior to execution of the application program. During or prior to execution of the basic block the re-computed check value is verified to be the same as the remembered check value. If not, an error condition is indicated and a corrective action may be taken.

The article "Checking the Paths to Identify Mutant Application on Embedded Systems" published by Ahmadou Al Khary Sere et al. on 13 December 2010, Future Generation Information Technology, Springer Berlin Heidelberg, Berlin, Heidelberg, pages 459-468, presents an evaluation of the ability of a Java Card application to become mutant and a new countermeasure based on a runtime check of the application control flow to detect deviant mutations.

The article "Bytecode verification on Java smart cards" published by Xavier Leroy on 10 April 2002, Software Practice & Experience, Wiley & Sons, Bognor Regis, GB, vol. 32, no. 4, pages 319-340, presents an approach to the problem of bytecode verification for Java Card applets. By relying on prior off-card bytecode transformations, the bytecode verifier is simplified and its memory requirements are reduced to the point where it can be embedded on a smart card, thus increasing significantly the security of post-issuance downloading of applets on Java Cards.

### SUMMARY OF THE INVENTION

It is an object of the invention to facilitate a more flexible deployment of applets on smart cards. This object is achieved by a process for verifying a computer program on a smart card as defined in claim 1, and by a system for verifying a computer program on a smart card as defined in claim 4.

According to an aspect of the invention, a process for verifying a computer program on a smart card is conceived, the process comprising: identifying, within said computer program, one or more instruction sequences that have a single start point and one or more end points in the program flow; identifying, in each instruction sequence, one or more basic blocks that have a single start point and a single end point in the program flow; verifying the instruction sequences by verifying each basic block identified in said instruction sequences, wherein each instruction sequence operates on a memory frame that is reserved for storing operands and results of instructions comprised in the respective instruction sequence, characterized in that verifying a basic block comprises verifying, for each instruction comprised in said basic block, that the memory frame comprises operands required by said instruction, that said operands have the correct type, and that said operands are accessible for said instruction, wherein the memory frame corresponds to a memory area of a transient memory unit of the smart card, and in that the computer program is installed on the smart card if verifying the instruction sequence succeeds. According to an exemplary embodiment, before verifying a basic block, said basic block is normalized by bringing the memory frame in a predefined state at the beginning of said basic block.

According to a further exemplary embodiment, all subsequent basic blocks in the program flow are normalized before said subsequent basic blocks are verified.

According to a further aspect of the invention, a system for verifying a computer program on a smart card is conceived, the system comprising: a part for identifying, within said computer program, one or more instruction sequences that have a single start point and one or more end points in the program flow; a part for identifying, in each instruction sequence, one or more basic blocks that have a single start point and a single end point in the program flow; a part for verifying the instruction sequences by verifying each basic block identified in said instruction sequences, wherein each instruction sequence operates on a memory frame that is reserved for storing operands and results of instructions comprised in the respective instruction sequence, characterized in that verifying a basic block comprises verifying, for each instruction comprised in said basic block, that the memory frame comprises operands required by said instruction, that said operands have the correct type, and that said operands are accessible for said instruction, wherein the memory frame corresponds to a memory area of a transient memory unit of the smart card, and in that the computer program is installed on the smart card if verifying the instruction sequence succeeds.

### BRIEF DESCRIPTION OF THE DRAWINGS

The invention will be described in more detail with reference to the appended drawings, in which:
Fig. 1 illustrates a typical architecture of a smart card;
Fig. 2 illustrates a process for verifying a computer program on a smart card in accordance with an exemplary embodiment of the invention.

### DESCRIPTION OF EMBODIMENTS

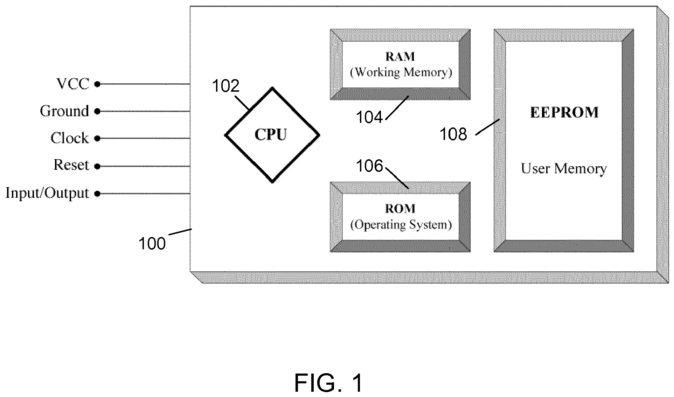

**Fig. 1** illustrates a typical architecture of a smart card. The smart card 100 comprises a central processing unit 102, a random access memory 104, a read-only memory 106 and a non-volatile memory 108, in particular an electrically erasable programmable read-only memory. These components are interconnected (not shown) in order to execute the functions provided by the smart card 100. The random access memory 104 is an example of a transient or volatile memory and is typically used as a working memory of the central processing unit 102. The read-only memory 106 is typically used for storing the operating system of the smart card 100. The electrically erasable programmable read-only memory 108 is an example of a persistent or non-volatile memory and is typically used as a user memory, i.e. for storing applications (applets) which implement the aforementioned functions provided by the smart card 100. Instead of an electrically erasable programmable read-only memory a Flash memory may be used, which is another example of a non-volatile memory. As mentioned above, there is a need for a more flexible deployment of applets on smart cards.

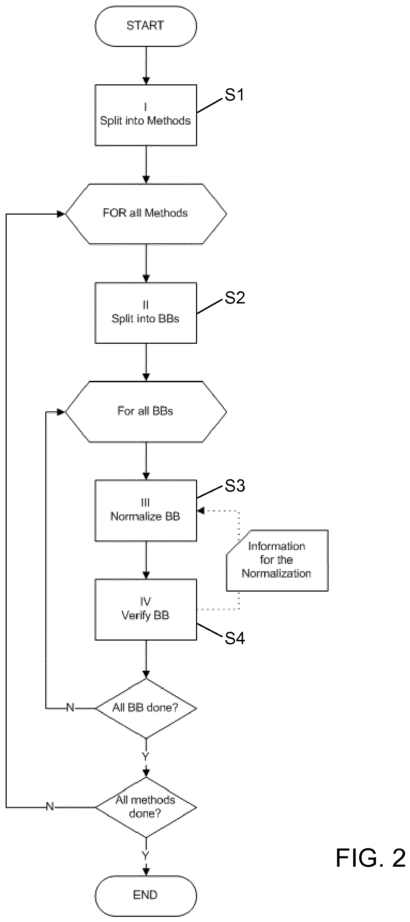

Fig. 2 illustrates a process for verifying a computer program on a smart card in accordance with an exemplary embodiment of the invention.

The verification process is embedded in the following sequence: first it begins with compiling the source code of the computer program to an intermediate language, for example Java byte codes. The compiled code is loaded into the system via the communication interface of the smart card. When the code has been loaded the verification starts. If the verification process succeeds, the code is installed on the smart card's system. Subsequently, the code may be executed.

The system comprises a central processing unit and at least two kinds of memory (transient and persistent) as well as a communication interface. The system is equipped with an interpreter for the aforementioned intermediate language. For example, the system may be equipped with a Java Virtual Machine capable of interpreting Java byte codes. The intermediate language consists of a specified set of rules, called instructions; these can be read and interpreted by the aforementioned interpreter. These instructions are strictly defined by the types of data they use.

A computer program loaded into the system is structured into sequences of instructions. These sequences of instructions are referred to as "methods" herein for the sake of brevity. A method consists of a defined sequence of instruction with exactly one start point and one or more end points in the program flow. Each method of a program can be seen as an independent object for the verification, because each method works on its own memory frame (MF), where it stores all operands for its instructions and their results.

According to the present disclosure, the methods of the loaded program are split into one or more so-called "basic blocks" (BBs). A BB is a subsequence of one method that has exactly one entry or start point, which is the first instruction of the BB, and exactly one end point, which is the last instruction of the BB. Each end point of a BB points to a start point of one or more following BBs. Therefore, all BBs of a method will build a so called flow graph (FG).

The type verification process is done on each of the BBs. In other words, each basic block in each sequence of instructions identified in the computer program is verified in order to verify the whole computer program. More specifically, verifying a basic block comprises verifying, for each instruction comprised in said basic block, that the memory frame comprises operands required by said instruction, that said operands have the correct type, and that said operands are accessible for said instruction.

The verification of the computer program is shown in Fig. 2. It starts with splitting S1 the computer program into methods, i.e. into instruction sequences with exactly one start point and one or more end points in the program flow. Subsequently, each of these methods is split S2 into BBs and the corresponding FG of the method. At this stage, each of the BBs is marked as not verified. Subsequently, two steps are performed for each BB. First, the BB is normalized S3 if this is necessary. "Normalizing" is defined as bringing the MF of the method in a predefined state at the beginning of the BB. Second, the BB has to be verified S4. During this verification all the required information for potential subsequent normalization is calculated. When all BBs of a method have been verified, the next method will be verified. The verification process has finished when all methods have been verified.

The goal of the verification is to ensure that each instruction has all the operands it needs in the defined MF. The verification is done on BBs; a precondition is that the MF is in a predefined state at the beginning of this BB. This is achieved by a normalization step.

The verification itself will be done by the interpretation of each instruction in respect of the used types of operands. This means that it will be checked for each instruction that all needed operands of the correct types are saved in the MF and that they are accessible for the instruction. This is done for each instruction of the BB and as long as the state of the MF after the last instruction of the BB is not modified. If the state of the MF after the last instruction is not equal to the predefined state, a transform function T will be calculated by the system. This function is needed by the normalization to transform the MF at the end of this BB and the beginning of each following BB. When the verification process has verified the last instruction of a BB, this BB is marked as verified.

The normalization applies the transform function T (as calculated during verification) to the BBs. When the verification of a BB detects that this BB needs to be normalized, it calculates the transform function T. This function maps the actual state of the MF to the predefined state of the MF. Its inverse maps the predefined state of the MF to the actual state of the MF. With this transform function T the normalization can compute the correct instruction to achieve a defined state for the MF. If the current BB is normalized, all its successors in the FG need to be normalized with the inverse function of T as well. This is done as follows: all successors S of the current BB are also transformed with the inverse function of T. Then for each of this successors S its predecessors are transformed with the function T, except the current BB, which is already done. Each BB that is visited by the normalization is marked as not verified and has to be re-verified. The complete verification process can be executed in the transient memory of the system.

Reiterating, the verification process or algorithm according to an exemplary embodiment of the invention may comprise the following parts: (1) identification of methods, (2) identification of basic blocks, (3) verification of each basic block, and (4) if necessary, normalization. The complete verification process may be executed on the smart card and will work with the complete set of byte codes as for example specified by the Java Card Platform.

The above-mentioned embodiments illustrate rather than limit the invention, and the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. The invention may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: smart card
- 102: central processing unit
- 104: random access memory
- 106: read-only memory
- 108: non-volatile memory
- S1: step "split into methods"
- S2: step "split into basic blocks"
- S3: step "normalize basic block"
- S4: step "verify basic block"

## Claims

1. A process for verifying a computer program on a smart card (100), the process comprising:
- identifying (S1), within said computer program, one or more instruction sequences that have a single start point and one or more end points in the program flow;
- identifying (S2), in each instruction sequence, one or more basic blocks that have a single start point and a single end point in the program flow;
- verifying the instruction sequences by verifying (S4) each basic block identified in said instruction sequences,
wherein each instruction sequence operates on a memory frame that is reserved for storing operands and results of instructions comprised in the respective instruction sequence, wherein the memory frame corresponds to a memory area of a transient memory unit (104) of the smart card (100);
**characterized in that** verifying (S4) a basic block comprises verifying, for each instruction comprised in said basic block, that the memory frame comprises operands required by said instruction, that said operands have the correct type, and that said operands are accessible for said instruction, and **in that** the computer program is installed on the smart card (100) if verifying the instruction sequences succeeds.

2. A process as claimed in claim 1,
wherein, before verifying a basic block, said basic block is normalized (S3) by bringing the memory frame in a predefined state at the beginning of said basic block.

3. A process as claimed in claim 2,
wherein all subsequent basic blocks in the program flow are normalized before said subsequent basic blocks are verified.

4. A system for verifying a computer program on a smart card (100), the system comprising:
- a part for identifying (S1), within said computer program, one or more instruction sequences that have a single start point and one or more end points in the program flow;
- a part for identifying (S2), in each instruction sequence, one or more basic blocks that have a single start point and a single end point in the program flow;
- a part for verifying the instruction sequences by verifying (S4) each basic block identified in said instruction sequences,
wherein each instruction sequence operates on a memory frame that is reserved for storing operands and results of instructions comprised in the respective instruction sequence, wherein the memory frame corresponds to a memory area of a transient memory unit (104) of the smart card (100);
**characterized in that** verifying (S4) a basic block comprises verifying, for each instruction comprised in said basic block, that the memory frame comprises operands required by said instruction, that said operands have the correct type, and that said operands are accessible for said instruction, and **in that** the system comprises a part for installing the computer program on the smart card (100) if verifying the instruction sequences succeeds.

## Patentansprüche

1. Ein Verfahren zum Verifizieren eines Computerprogramms auf einer Smartcard (100), das Verfahren aufweisend:
- Identifizieren (S1), innerhalb des Computerprogramms, von einer oder mehreren Anweisungssequenzen, die einen einzigen Startpunkt und einen oder mehrere Endpunkte in dem Programmfluss haben;
- Identifizieren (S2), in jeder Anweisungssequenz, von einem oder mehreren grundlegenden Blöcken, die einen einzigen Startpunkt haben und einen einzigen Endpunkt im Programmfluss haben;
- Verifizieren der Anweisungssequenzen durch ein Verifizieren (S4) jedes grundlegenden Blocks, der in den Anweisungssequenzen identifiziert wird,
wobei jede Anweisungssequenz operiert auf einem Speicherrahmen, der reserviert ist für ein Speichern von Operanden und Ergebnissen von Anweisungen, die in der entsprechenden Anweisungssequenz enthalten sind, wobei der Speicherrahmen entspricht einem Speicherbereich einer transienten Speichereinheit (104) der Smartcard (100); **dadurch gekennzeichnet,**
**dass** das Verifizieren (S4) eines grundlegenden Blocks aufweist ein Verifizieren, für jede Anweisung, die in dem grundlegenden Block enthalten ist, dass der Speicherrahmen Operanden aufweist, die für die Anweisung erforderlich sind, dass die Operanden den korrekten Typ haben und dass die Operanden zugreifbar sind für die Anweisung, und dadurch,
**dass** das Computerprogramm installiert wird auf der Smartcard (100), falls das Verifizieren der Anweisungssequenzen erfolgreich ist.

2. Ein Verfahren gemäß Anspruch 1, wobei, vor dem Verifizieren eines grundlegenden Blocks, der grundlegende Block normalisiert (S3) wird durch Bringen des Speicherrahmens in einen vordefinierten Zustand an dem Anfang des grundlegenden Blocks.

3. Ein Verfahren gemäß Anspruch 2, wobei alle nachfolgenden grundlegenden Blöcke in dem Programmfluss normalisiert sind, bevor die nachfolgenden grundlegenden Blöcke verifiziert werden.

4. Ein System zum Verifizieren eines Computerprogramms auf einer Smartcard (100), das System aufweisend:
- einen Teil zum Identifizieren (S1), innerhalb des Computerprogramms, von einer oder mehreren Anweisungssequenzen, die einen einzigen Startpunkt und einen oder mehrere Endpunkte in dem Programmfluss haben;
- einen Teil zum Identifizieren (S2), in jeder Anweisungssequenz, von einem oder mehreren grundlegenden Blöcken, die einen einzigen Startpunkt und einen einzigen Endpunkt in dem Programmfluss haben;
- einen Teil zum Verifizieren der Anweisungssequenzen durch ein Verifizieren (S4) von jedem grundlegenden Block, der in den Anweisungssequenzen identifiziert wird,
wobei jede Anweisungssequenz operiert auf einem Speicherrahmen, der reserviert ist für ein Speichern von Operanden und Ergebnissen von Anweisungen, die in der entsprechenden Anweisungssequenz enthalten sind, wobei der Speicherrahmen entspricht einem Speicherbereich einer transienten Speichereinheit (104) der Smartcard (100); charakterisiert dadurch,
dass das Verifizieren (S4) eines grundlegenden Blocks aufweist ein Verifizieren, für jede Anweisung, die in dem grundlegenden Block enthalten ist, dass der Speicherrahmen Operanden aufweist, die für die Anweisung erforderlich sind, dass die Operanden den korrekten Typ haben, und dass die Operanden zugreifbar sind für die Anweisung, und dadurch,
dass das System aufweist einen Teil zum Installieren des Computerprogramms auf der Smartcard (100), falls das Verifizieren der Anweisungssequenzen erfolgreich ist.

## Revendications

1. Procédé de vérification d'un programme d'ordinateur sur une carte intelligente (100), le procédé comprenant les étapes suivantes :
- identification (S1), au sein dudit programme d'ordinateur, d'une ou de plusieurs séquences d'instructions possédant un seul point de départ et un ou plusieurs points de fin dans le déroulement de programme ;
- identification (S2), dans chaque séquence d'instructions, d'un ou de plusieurs blocs élémentaires possédant un seul point de départ et un seul point de fin dans le déroulement de programme ;
- vérification des séquences d'instructions par vérification (S4) de chaque bloc élémentaire identifié dans lesdites séquences d'instructions,
chaque séquence d'instructions fonctionnant sur une trame mémoire réservée au stockage d'opérandes et de résultats d'instructions contenues dans la séquence d'instructions respective, la trame mémoire correspondant à une zone mémoire d'une unité de mémoire transitoire (104) de la carte intelligente (100) ;
le procédé étant **caractérisé en ce que** la vérification (S4) d'un bloc élémentaire comprend la vérification, pour chaque instruction contenue dans ledit bloc élémentaire, que la trame mémoire comprend des opérandes requis par ladite instruction, que lesdits opérandes sont du type correct et que lesdits opérandes sont accessibles à ladite instruction, et **en ce que** le programme d'ordinateur est installé sur la carte intelligente (100) en cas de succès de la vérification des séquences d'instructions.

2. Procédé selon la revendication 1,
dans lequel, avant la vérification d'un bloc élémentaire, ledit bloc élémentaire est normalisé (S3) par amenée de la trame mémoire dans un état prédéfini au début dudit bloc élémentaire.

3. Procédé selon la revendication 2,
dans lequel tous les blocs élémentaires suivants dans le déroulement de programme sont normalisés avant la vérification desdits blocs élémentaires suivants.

4. Système de vérification d'un programme d'ordinateur sur une carte intelligente (100), le système comprenant :
- une partie d'identification (S1), au sein dudit programme d'ordinateur, d'une ou de plusieurs séquences d'instructions possédant un seul point de départ et un ou plusieurs points de fin dans le déroulement de programme ;
- une partie d'identification (S2), dans chaque séquence d'instructions, d'un ou de plusieurs blocs élémentaires possédant un seul point de départ et un seul point de fin dans le déroulement de programme ;
- une partie de vérification des séquences d'instructions par vérification (S4) de chaque bloc élémentaire identifié dans lesdites séquences d'instructions,
chaque séquence d'instructions fonctionnant sur une trame mémoire réservée au stockage d'opérandes et de résultats d'instructions contenues dans la séquence d'instructions respective, la trame mémoire correspondant à une zone mémoire d'une unité de mémoire transitoire (104) de la carte intelligente (100) ;
le système étant **caractérisé en ce que** la vérification (S4) d'un bloc élémentaire comprend la vérification, pour chaque instruction contenue dans ledit bloc élémentaire, que la trame mémoire comprend des opérandes requis par ladite instruction, que lesdits opérandes sont du type correct et que lesdits opérandes sont accessibles à ladite instruction, et **en ce qu'**il comprend une partie d'installation du programme d'ordinateur sur la carte intelligente (100) en cas de succès de la vérification des séquences d'instructions.
